# EUROPÄISCHE PATENTSCHRIFT

(11) **EP 1 423 652 B1**
(45) Veröffentlichungstag und Bekanntmachung des Hinweises auf die Patenterteilung: **15.04.2009**
(21) Anmeldenummer: 02772207.3
(22) Anmeldetag: 26.08.2002
(51) Int. Cl.: F25D 23/06, B29C 44/12

(54) **AUSGESCHÄUMTER HOHLKÖRPER UND VERFAHREN ZUM VERHINDERN DES SCHAUMAUSTRITTS AN EINER ÖFFNUNG EINES AUSZUSCHÄUMENDEN HOHLKÖRPERS**
FOAM-FILLED HOLLOW BODY AND METHOD FOR PREVENTING FOAM FROM DISCHARGING AT AN OPENING OF A HOLLOW BODY TO BE FOAM-FILLED
CORPS CREUX MOUSSE ET PROCEDE POUR EVITER LE DEBORDEMENT DE MOUSSE PAR UN ORIFICE D'UN CORPS CREUX DEVANT SUBIR UN MOUSSAGE

(30) Priorität: 30.08.2001 DE 10142510
(43) Veröffentlichungstag der Anmeldung: 02.06.2004
(73) Patentinhaber: BSH Bosch und Siemens Hausgeräte GmbH, 81739 München (DE)
(72) Erfinder: LAIBLE, Karl-Friedrich, 89129 Langenau (DE); STEICHELE, Helmut, 89415 Lauingen (DE)
(86) Internationale Anmeldenummer: PCT/EP2002/009512
(87) Internationale Veröffentlichungsnummer: WO 2003/021170

(56) Entgegenhaltungen:
- US-A- 4 190 305
- US-A- 5 335 988
- PATENT ABSTRACTS OF JAPAN vol. 015, no. 393 (M-1165), 4. Oktober 1991 (1991-10-04) & JP 03 160293 A (SANYO ELECTRIC CO LTD), 10. Juli 1991 (1991-07-10)
- PATENT ABSTRACTS OF JAPAN vol. 1998, no. 06, 30. April 1998 (1998-04-30) & JP 10 047834 A (HOSHIZAKI ELECTRIC CO LTD), 20. Februar 1998 (1998-02-20)

## Beschreibung

Die vorliegende Erfindung betrifft ein einen ausgeschäumten Hohlkörper, insbesondere ein Kältegerätegehäuse, und ein Verfahren zum Verhindern des Schaumaustritts an einer Öffnung einer Wand eines auszuschäumenden Hohlkörpers. Solch ein Hohlkörper ist aus Dokument US 5335988 bekannt.

Die Gehäuse von Kältegeräten sind üblicherweise aufgebaut aus einer Außenwand und einer einen Kühlraum im Innern des Kältegeräts begrenzenden Innenwand, die zwischen sich einen Hohlraum einschließen, der im Laufe der Fertigung des Kältegeräts mit einem thermisch isolierenden Schaum ausgefüllt wird. Dabei wird das Material, das den Schaum bilden soll, in einem dichten, mehr oder weniger fließfähigen Zustand in den Zwischenraum eingespritzt, und das Aufschäumen durch Blasenbildung in dem Material findet zumindest zum überwiegenden Teil statt, wenn sich dieses im Zwischenraum befindet. Dabei ist die zu verwendende Materialmenge so zu dosieren, dass das Material im aufgeschäumten Zustand den Zwischenraum ausfüllt, ohne dass schaumfreie Hohlräume zurückbleiben. Der Schaum steht daher im Innern des Zwischenraums unter einem gewissen Überdruck und neigt dazu, durch Öffnungen der Außen- oder Innenwand zu entweichen. Es ist wichtig, das Entweichen des Schaums zu vermeiden, zum einen, weil die nachträgliche Beseitigung von ausgetretenem Schaum von der Oberfläche der Wände des Kältegeräts zeit- und kostenaufwendig ist, zum anderen weil im Falle des Austretens von Schaum nicht mehr garantiert werden kann, dass die eingespritzte Materialmenge reicht, um den Zwischenraum tatsächlich lückenlos auszuschäumen.

Andererseits wird eine gewisse Anzahl von Öffnungen des Gehäuses, in der Außen- wie der Innenwand benötigt, um daran z.B. ein Türscharnier, Teleskopschienen für im Innenraum angeordnete Auszüge, etc. montieren zu können.

Alle diese Öffnungen müssen vor dem Ausschäumen zeitweilig verschlossen werden.

Im Falle von Öffnungen, die für die Montage eines Türscharniers vorgesehen sind, ist es bekannt, zwischen der Öffnung und einem sie umgebenden Abschnitt der Wand einerseits und einem Versteifungsteil, das ein sich mit der Öffnung überdeckendes Loch aufweist, andererseits eine zerstörbare Materialschicht anzubringen, die während des Ausschäumens des Hohlkörpers die Öffnung verschließt, und nach dem Ausschäumen die zerstörbare Materialschicht im Bereich der Öffnung zu entfernen, um in der Öffnung ein Befestigungselement anbringen zu können. Da die zerstörbare Materialschicht im allgemeinen nicht schweißbar ist, wird eine Schweißverbindung zum Befestigen des Versteifungsteils an der Wand in einem Abstand von der zerstörbaren Materialschicht erzeugt.

Ein Problem bei dieser Vorgehensweise ist, dass das Versteifungsteil und die zerstörbare Materialschicht in einem recht frühen Stadium der Montage des Gehäuses an der Wand montiert werden müssen, und dass, wenn bei Handhabungsschritten zwischen der Montage und dem Ausschäumen die zerstörbare Schicht verrutscht, sie den Austritt von Schaum nicht mehr sicher verhindern kann.

Dieses Problem ließe sich zwar umgehen, indem man die zerstörbare Schicht in einem eigenen Arbeitsgang befestigt, doch ist dies wiederum mit erhöhtem Aufwand und Kosten verbunden.

Aufgabe der Erfindung ist, ein Verfahren zum Verhindern des Schaumaustritts an einer mit einem Verstärkungsteil hinterlegten Öffnung einer Wand eines Hohlkörpers, das eine wirksame Sicherung gegen Schaumaustritt mit minimalem Arbeitsaufwand liefert, sowie einen für die Durchführung des Verfahrens geeigneten Hohlkörper anzugeben..

Die Aufgabe wird gelöst durch ein Verfahren mit den Merkmalen des Anspruchs 1 bzw. einen Hohlkörper mit den Merkmalen des Anspruchs 6.

Indem eine Verbindung zwischen dem Wandabschnitt und dem Verstärkungsteil ohne wesentliche Erhitzung der Wand und des Verstärkungsteils, d.h. ohne eine Erhitzung, die geeignet ist, die zerstörbare Schicht zu beschädigen, erzeugt wird, wird die Möglichkeit geschaffen, die Verbindung so nahe an der Öffnung der Wand zu platzieren, dass die Verbindung selbst dazu beitragen kann, dass die zerstörbare Schicht während der Montage des Hohlkörpers an ihrem Platz gehalten wird. Der Abstand der Verbindung von der Öffnung darf nicht größer sein als die längste Abmessung der zerstörbaren Schicht. So wird in einem gleichen Arbeitsgang, in dem das Verstärkungsteil an der Wand befestigt wird, auch die zerstörbare Materialschicht fixiert. Zwar wird ein Verrutschen der zerstörbaren Schicht nicht notwendigerweise ganz verhindert; es wird aber vermieden, dass sie so weit verrutscht, dass die Öffnung frei wird.

Vorzugsweise ist der Abstand der Verbindung von der Öffnung kleiner, und zwar so, dass die Verbindung sich durch die zerstörbare Schicht hindurch erstreckt. So ist die Schicht gegen jegliches Verrutschen gesichert.

Die Verbindung wird vorzugsweise durch Vortreiben eines Verbindungskörpers im Bereich der zerstörbaren Schicht geschaffen. Da die Verbindung durch Materialverformung erfolgt, tritt keine wesentliche Erhitzung auf, daher unterliegt man bei der Auswahl des Materials für die zerstörbare Schicht nur geringen Einschränkungen.

Die zerstörbare Schicht kann aus einem beliebigen flächigen Material bestehen, das beim Beseitigen der Materialschicht im Bereich der Öffnung leichter zerstörbar ist als die Wand oder das Verstärkungsteil selbst. Bevorzugt sind Materialien von geringer Festigkeit, die ohne spezielles Werkzeug, am besten mit einem in der Öffnung zu montierenden Werkstück selbst, durchstoßen werden können, wie etwa Papier, Kunststoff- oder Metallfolie, insbesondere Aluminiumfolie.

Die Verbindung durch Materialverformung kann z.B. eine Niet- oder Clinchverbindung sein.

Eine bevorzugte, wenn auch nicht ausschließliche Anwendung des Verfahrens ist das Ausschäumen von Kältegerätegehäusen, insbesondere bei Öffnungen, in denen lasttragende Teile wie etwa Teile eines Türscharniers montiert werden sollen.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine perspektivische Ansicht eines Kältegeräts, zu dessen Herstellung das erfindungsgemäße Verfahren anwendbar ist;
- Fig. 2: einen Schnitt durch eine Stirnleiste des Kältegeräts aus Fig. 1 mit einem daran montierten Scharnier;
- Fig. 3: ein vergrößertes Detail von Fig. 2;
- Fig. 4: ein anderes Detail eines Kältegerätegehäuses, wo das erfindungsgemäße Verfahren anwendbar ist; und
- Figs. 5a - e: Schritte des erfindungsgemäßen Verfahrens.

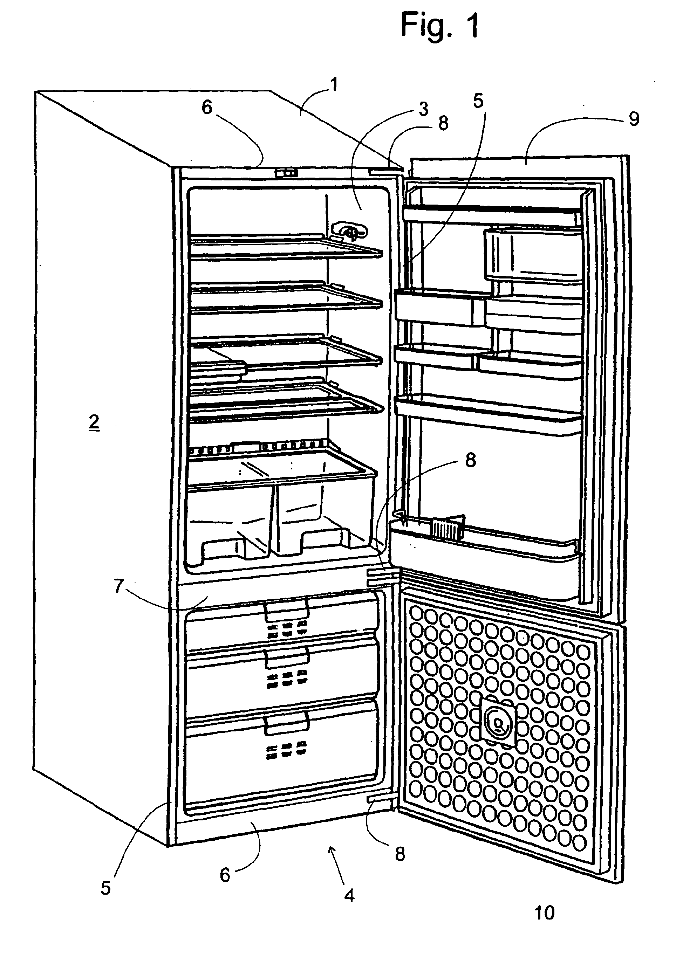

Fig. 1 zeigt in einer perspektivischen Ansicht ein Kältegerät mit einem Gehäuse 1, an dem die vorliegende Erfindung anwendbar ist. Das Gehäuse 1 umfasst eine Außenwand, die aus mehreren Seitenwandplatten 2 und einer Innenwand 3 aufgebaut ist, die im Bereich der Vorderseite 4 des Gehäuses über mit den Seitenwandplatten 2 einteilig verbundene Randstreifen 5, sowie sich quer über die Vorderseite 4 erstreckende Stimleisten 6, 7 verbunden sind.

Scharniere 8, die zwei Türen 9, 10 tragen, sind jeweils an den Stirnleisten 6, 7 verschraubt.

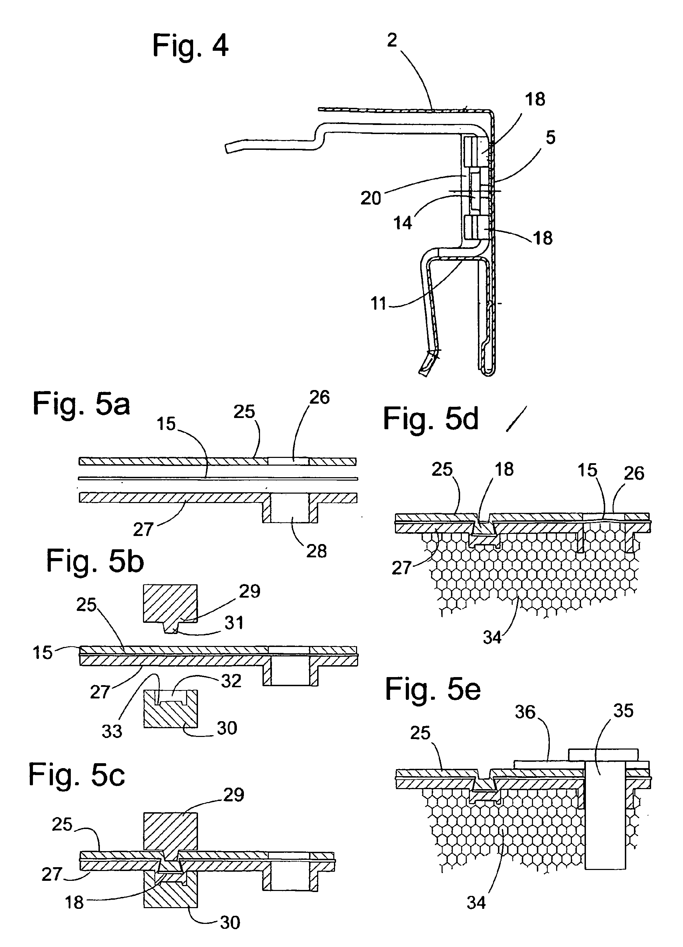

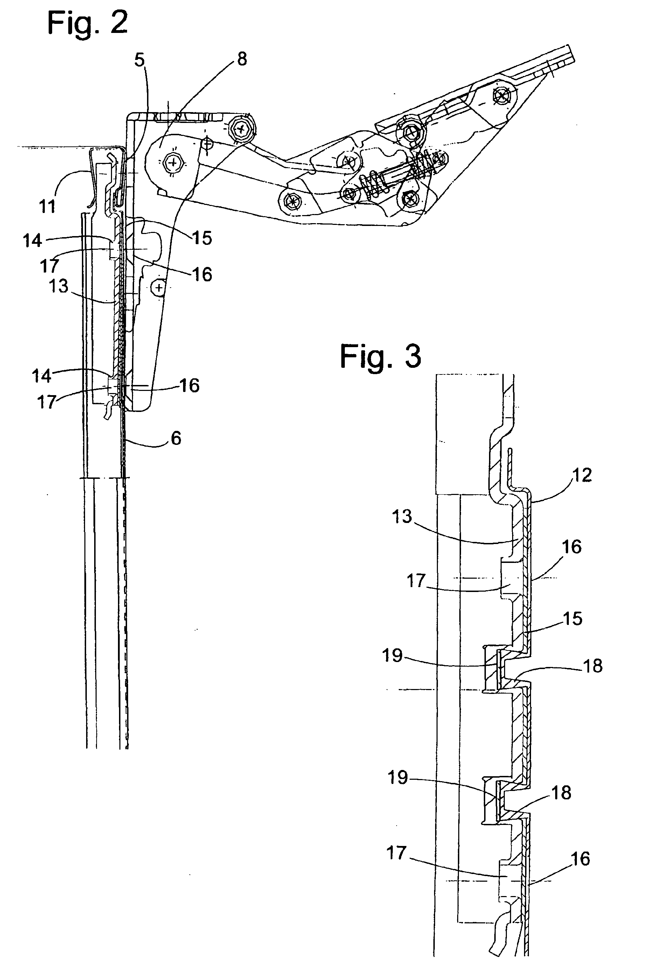

Fig. 2 zeigt einen horizontalen Schnitt durch den vorderen Bereich des Gehäuses 1 in Höhe eines Scharniers 8. Das freie Ende des Randstreifens 5 ist zu einer Klammer 11 geformt, in der die Stirnleiste 6 gehalten ist. Die Stirnleiste 6 setzt sich zusammen aus einem äußeren Sichtblech 12, einem Verstärkungsteil 13, in dem Gewindeschäfte 14 zur Aufnahme von (nicht dargestellten) Schrauben zur Befestigung des Scharniers 8 ausgebildet sind, sowie eine Schicht 15 aus einem zerstörbaren Material wie Papier, Kunststofffolie oder Metallfolie, die sich zwischen dem Sichtblech 12 und dem Verstärkungsteil 13 erstreckt und die in dem in der Fig. gezeigten Zustand vor der Montage der Schrauben zu deren Durchführung vorgesehene Öffnungen 16, 17 im Sichtblech 12 bzw. Verstärkungsteil 13 verschließt. Diese Struktur ist deutlicher zu erkennen in Fig. 3, die einen Endabschnitt der Stirnleiste 6 in vergrößertem Maßstab zeigt. An zwei Stellen ist ein (in der Fig. überdimensionierter) kegelstumpfförmiger Verbindungskörper 18 einteilig aus dem Sichtblech 12 der Stirnleiste 6 geformt und unter Mitnahme eines Stücks 19 der zerstörbaren Schicht 15 in das Material des Verstärkungsteils 13 vorgetrieben. Da der Verbindungskörper 18 einen kegelförmig aufgeweiteten Kopf aufweist, hält er den Verbund aus Sichtblech 12, Schicht 15 und Verstärkungsteil 13 fest zusammen. Auf die Herstellung des Verbindungskörpers 18 wird mit Bezug auf Fig. 5 noch eingegangen.

Fig. 4 zeigt in einem horizontalen Schnitt den Vorderabschnitt einer Seitenwandplatte 2 mit Randstreifen 5 und Klammer 11 nach einer abgewandelten Ausgestaltung. Hier ist im Vergleich zur Ausgestaltung der Fig. 2 der Randstreifen 5 verbreitert, so dass die Klammer 11 nicht mehr die Seitenwandplatte 2 berührt, sondern von dieser durch einen Zwischenraum getrennt ist, in dem ein Verstärkungsteil 20 mit einem angeformten Gewindeschaft 14 angeordnet ist, der vorgesehen ist, um eine Schraube zur Verankerung eines Türscharniers aufzunehmen. Beiderseits der für die Schraube vorgesehenen Öffnung 21 des Randstreifens 5 sind in entsprechender Weise wie in Fig. 3 Verbindungskörper 18 in das Verstärkungsteil 20 vorgetrieben.

Die Fig. 5a bis e veranschaulichen die Erzeugung dieser Verbindungskörper.

Fig. 5a zeigt einen Abschnitt einer metallischen Wand 25, bei der es sich z.B. um die Stirnleiste 6 aus Fig. 3 oder den Randstreifen 5 aus Fig. 4 handeln könnte, mit einer darin gebildeten Öffnung 26. Ein Verstärkungsteil 27, ebenfalls mit einer Öffnung 28, soll zur Verstärkung der Wand 25 an dieser angebracht werden. Zwischen beiden ist eine Schicht 15 aus zerstörbarem Material gezeigt.

Diese drei Teile werden, wie in Fig. 5b gezeigt, in Kontakt miteinander gebracht, und ein Stempel 29 und eine Matrize 30 werden einander gegenüberliegend an der Wand 25 und dem Verstärkungsteil 27 positioniert. Der Stempel 29 trägt einen kegelstumpfförmigen Dorn 31; die Matrize 30 weist eine komplementäre Aussparung 32 von im wesentlichen zylindrischer Form mit einer am äußeren Rand ihres Bodens gebildeten ringförmigen Vertiefung 33 auf. Beim Gegeneinanderfahren von Stempel und Matrize wird das Material der Wand 25 und des Verstärkungsteils 27 verformt, wobei zunächst Material des Verstärkungsteils 27 in Kontakt mit dem zentralen Bereich des Bodens der Aussparung 32 gelangt. Beim weiteren Schließen von Stempel und Matrize wird das Material vor der Spitze des Dorns 31 in radialer Richtung auseinander getrieben, um die ringförmige Vertiefung 33 auszufüllen, wodurch sich, wie in Fig. 5c gezeigt, aus dem Material der Wand 25 im Innern des Verstärkungskörpers 27 der oben erwähnte Verbindungskörper 18 mit einem zur Matrize 30 hin breiter werdenden Kopf bildet, der eine unlösbare Verbindung zwischen der Wand 25 und dem Verstärkungsteil 27 schafft. Da sich der Verbindungskörper 18 durch die zerstörbare Schicht 15 erstreckt, ist diese gegen Verrutschen gesichert.

Dieses Verbindungsverfahren wird auch als Clinchen bezeichnet.

In Teil c der Fig. 5 ist zwar jeweils nur eine einzelne Clinchverbindung gezeichnet, es versteht sich aber, dass in der Umgebung der Öffnung 26 so viele Clinchverbindungen gebildet werden können, wie nötig, um das Verstärkungsteil 27 hinreichend an der Wand 25 zu befestigen.

Andere Möglichkeiten, die Wand 25 und das Verstärkungsteil 27 bei gleichzeitiger Befestigung der Schicht 15 miteinander zu verbinden, sind die Verwendung von Nieten oder Schrauben als Verbindungskörper.

Nach dem Zusammenfügen der Wand 25, des Verstärkungsteils 27 und der Schicht 15 wird diese in nicht gezeigter Weise mit anderen Teilen zu einem Hohlkörper wie insbesondere dem Gehäuse eines Kältegeräts zusammengefügt. Beim nachfolgenden Ausschäumen des Hohlkörpers versperrt die Schicht 15 die Öffnung 26, so dass, wie Fig. 5d zeigt, ein Durchtritt des Schaums 34 durch die Öffnung 26 ausgeschlossen ist.

Sobald der Schaum 34 hinreichend abgebunden ist, so dass er bei einer Zerstörung der Schicht 15 nicht mehr austritt, kann man die Schicht 15 im Bereich der Öffnung 26 mit einem zur Montage in der Öffnung 26 vorgesehenen Befestigungselement wie etwa einer in Fig. 5e schematisch dargestellten Schraube 35 durchstoßen, um z.B. einen Teil 36 eines Türscharniers an der Wand 25 festzuschrauben.

Bei den hier beschriebenen Bespielen ist immer davon ausgegangen worden, dass der Verbindungskörper von der Außenseite des Hohlkörpers in ein im Innern befindliches Verstärkungsteil vorgetrieben wurde. Dies hat den Vorteil, dass an der Außenseite des Hohlkörpers keine Vorsprünge entstehen, die die Befestigung eines Werkstücks an der Oberfläche behindern könnten. Selbstverständlich kann der Verbindungskörper aber auch von der Innenseite her vorgetrieben werden. Ein dann eventuell an der Außenseite entstehender Vorsprung kann dann z.B. als eine Verdrehsicherung eines an der Außenseite zu befestigendes Werkstücks dienen.

## Patentansprüche

1. Verfahren zum Verhindern des Schaumaustritts an einer Öffnung (26) einer Wand (25) eines auszuschäumenden Hohlkörpers, mit den Schritten:
- Anbringen einer zerstörbaren Materialschicht (15) zwischen der Öffnung (26) des Hohlkörpers und einem sie umgebenden Abschnitt der Wand (25) einerseits und einem Verstärkungsteil (27), das ein sich mit der Öffnung (26) überdeckendes Loch (28) aufweist, andererseits,
- Ausschäumen des Hohlkörpers,
- Beseitigen der zerstörbaren Materialschicht (15) im Bereich der Öffnung (26),
wobei vor dem Ausschäumen wenigstens eine Verbindung zwischen dem Abschnitt der Wand (25) und dem Verstärkungsteil (27) ohne wesentliches Erhitzen der Wand oder des Verstärkungsteils in einem Abstand von der Öffnung geschaffen wird, der kleiner als die längste Abmessung der zerstörbaren Schicht ist.

2. Verfahren nach Anspruch 1, **dadurch gekennzeichnet, dass** die Verbindung durch die zerstörbare Schicht (15) hindurch getrieben wird.

3. Verfahren nach Anspruch 1 oder 2, **dadurch gekennzeichnet, dass** die Verbindung durch Vortreiben eines Verbindungskörpers (18) von der Wand (25) in das Verstärkungsteil (27) oder umgekehrt geschaffen wird.

4. Verfahren nach Anspruch 3, **dadurch gekennzeichnet, dass** der Verbindungskörper (18) von der Wand (25) in das Verstärkungsteil (27) vorgetrieben wird.

5. Verfahren nach einem der vorhergehenden Ansprüche, **dadurch gekennzeichnet, dass** als zerstörbare Schicht (15) wenigstens eine Lage aus Papier, Kunststoff- oder Metallfolie verwendet wird.

6. Ausgeschäumter Hohlkörper mit einer Wand (25), in der eine Öffnung (26) gebildet ist, einem Verstärkungsteil (27), das ein sich mit der Öffnung (26) überdeckendes Loch (28) aufweist, und einer zwischen der Wand (25) und dem Verstärkungsteil (27) angeordneten zerstörbaren Schicht (15), wobei die Wand und das Verstärkungsteil (27) durch eine ohne wesentliches Erhitzen der Wand und/oder des Verstärkungsteils geschaffene Verbindung verbunden sind und dass der Abstand der Verbindung von der Öffnung klein genug gewählt, dass ein Freiwerden der Öffnung durch Kontakt der zerstörbaren Schicht mit der Verbindung ausgeschlossen ist.

7. Hohlkörper nach Anspruch 6, **dadurch gekennzeichnet, dass** die Verbindung sich durch die zerstörbare Schicht (15) erstreckt,

8. Hohlkörper nach Anspruch 6 oder 7, **dadurch gekennzeichnet, dass** die Verbindung eine Niet- oder Clinchverbindung ist.

9. Hohlkörper nach einem der Ansprüche 6 bis 8, **dadurch gekennzeichnet, dass** er das Gehäuse (1) eines Kältegeräts ist.

10. Hohlkörper nach Anspruch 9, **dadurch gekennzeichnet, dass** die Öffnung (16, 21) in einer Vorderseite (4) des Gehäuses (1) angebracht ist und für die Montage eines Scharniers (8) vorgesehen ist.

## Claims

1. Method of preventing the issue of foam at an opening (26) of a wall (25) of a hollow body to be filled with foam, comprising the steps:
- application of a destructible material layer (15) between the opening (26) of the hollow body and a section, which surrounds it, of the wall (25) on the one hand and a reinforcing part (27), which has a hole (28) congruent with the opening (26), on the other hand,
- filling the hollow body with foam, and
- eliminating the destructible material layer (15) in the region of the opening (26), wherein prior to the filling with foam at least one connection between the section of the wall (25) and the reinforcing part (27) is created at a spacing from the opening substantially without heating of the wall or of the reinforcing part, the spacing being smaller than the longest dimension of the destructible layer.

2. Method according to claim 1, **characterised in that** the connection is driven through the destructible layer (15).

3. Method according to claim 1 or 2, **characterised in that** the connection is created by driving forward a connecting body (18) from the wall (25) into the reinforcing part (27) or conversely.

4. Method according to claim 3, **characterised in that** the connecting body (18) is driven forward from the wall (25) into the reinforcing part (27).

5. Method according to any one of the preceding claims, **characterised in that** at least one layer of paper, plastics material or metal foil is used as destructible layer (15).

6. Foam-filled hollow body with a wall (25), in which an opening (26) is formed, a reinforcing part (27), which has a hole (28) congruent with the opening (26), and a destructible layer (15) arranged between the wall (15) and the connecting part (27), wherein the wall and the connecting part (27) are connected by a connection created substantially without heating the wall and/or the reinforcing part and that the spacing of the connection from the opening is selected to be sufficiently small that freeing of the opening by contact of the destructible layer with the connection is excluded.

7. Hollow body according to claim 6, **characterised in that** the connection extends through the destructible layer (15).

8. Hollow body according to claim 6 or 7, **characterised in that** the connection is a rivet or clinch connection.

9. Hollow body according to any one of claims 6 to 8, **characterised in that** it is the housing (1) of a refrigerator.

10. Hollow body according to claim 9, **characterised in that** the opening (16, 21) is formed in a front side (4) of the housing (1) and is provided for the mounting of a hinge (8).

## Revendications

1. Procédé pour éviter le débordement de mousse par un orifice (26) d'une paroi (25) d'un corps creux devant être moussé, comprenant les étapes de :
- application d'une couche de matériau destructible (15) entre l'orifice (26) du corps creux et une partie de la paroi (25) l'entourant d'une part et une pièce de renfort (27) qui présente un trou (28) coïncidant avec l'orifice (26) d'autre part,
- moussage du corps creux,
- élimination de la couche de matériau destructible (15) dans la zone de l'orifice (26),
dans lequel au moins une liaison est créée entre la partie de la paroi (25) et la pièce de renfort (27) avant le moussage, sans échauffement substantiel de la paroi ou de la pièce de renfort à une distance de l'orifice qui est inférieure à la plus grande dimension de la couche destructible.

2. Procédé selon la revendication 1, **caractérisé en ce que** la liaison est effectuée au travers de la couche destructible (15).

3. Procédé selon la revendication 1 ou 2, **caractérisé en ce que** la liaison est créée via forçage d'un corps de liaison (18) de la paroi (25) dans la pièce de renfort (27) ou vice versa.

4. Procédé selon la revendication 3, **caractérisé en ce que** le corps de liaison (18) est forcé de la paroi (25) dans la pièce de renfort (27).

5. Procédé selon l'une des revendications précédentes, **caractérisé en ce qu'**au moins une couche de papier, feuille en matière plastique ou métallique est utilisée en tant que couche destructible (15).

6. Corps creux moussé avec une paroi (25), dans laquelle est réalisé un orifice (26), une pièce de renfort (27) qui présente un trou (28) courant l'orifice (26), et une couche destructible (15) disposée entre la paroi (25) et la pièce de renfort (27), dans lequel la paroi et la pièce de renfort (27) sont reliées via une liaison créée sans échauffement substantiel de la paroi et/ou de la pièce de renfort et dans lequel la distance de la liaison à l'orifice est choisie suffisamment petite qu'une libération de l'orifice par contact de la couche destructible avec la liaison est exclue.

7. Corps creux selon la revendication 6, **caractérisé en ce que** la liaison s'étend au travers de la couche destructible (15).

8. Corps creux selon la revendications 6 ou 7, **caractérisé en ce que** la liaison est une liaison par rivets ou par serrage.

9. Corps creux selon l'une des revendications 6 à 8, **caractérisé en ce qu'**il est la carcasse (1) d'un appareil frigorifique.

10. Corps creux selon la revendication 9, **caractérisé en ce que** l'orifice (16, 21) est appliqué sur une face avant (4) de la carcasse (1) et est prévu pour le montage d'une charnière (8).
